(19) **Europäisches Patentamt**

**European Patent Office**

**Office européen des brevets**

(11) Veröffentlichungsnummer: **0 186 081**
**B1**

(12) **EUROPÄISCHE PATENTSCHRIFT**

(45) Veröffentlichungstag der Patentschrift: **14.03.90**

(51) Int. Cl.⁵: **C 09 J 7/02, C 09 J 4/00**

(21) Anmeldenummer: **85115984.8**

(22) Anmeldetag: **14.12.85**

(54) Klebstoff für Bleche.

(30) Priorität: **22.12.84 DE 3447025**

(43) Veröffentlichungstag der Anmeldung:
**02.07.86 Patentblatt 86/27**

(45) Bekanntmachung des Hinweises auf die
Patenterteilung:
**14.03.90 Patentblatt 90/11**

(84) Benannte Vertragsstaaten:
**AT BE CH DE FR GB IT LI NL SE**

(56) Entgegenhaltungen:
**EP-A-0 101 961**
**EP-A-0 119 491**
**DE-A-2 548 182**
**DE-A-2 942 128**
**US-A-3 470 048**

**Die Akte enthält technische Angaben, die nach
dem Eingang der Anmeldung eingereicht
wurden und die nicht in dieser Patentschrift
enthalten sind.**

(73) Patentinhaber: **Henkel Kommanditgesellschaft
auf Aktien
Postfach 1100 Henkelstrasse 67
D-4000 Düsseldorf-Holthausen (DE)**

(72) Erfinder: **Gierenz, Gerhard, Dr.
Dieselstrasse 80
D-5650 Solingen 19 (DE)**

Courier Press, Leamington Spa, England.

**Beschreibung**

Es ist bekannt, beschädigte oder korrodierte nichttragende Blechteile an Automobilkarosserien mit Tränkmassen auf der Basis ungesättigter Polyesterharze in Verbindung mit Glasfasergewebematten zu reparieren. Dabei geht man in der Weise vor, daß nach dem Entrosten der zu reparierenden Stelle ein Stück der Glasfasergewebematte genügender Größe mit Polyesterharz, das man vorher mit einem Härter vermischt hat, tränkt, und auf die beschädigte Stelle legt. Nach dem Abbinden des Polyesterharzes wird überschüssiges Harz weggeschliffen, die Stelle geglättet und in üblicher Weise überlackiert. Diese Arbeit ist umständlich und zeitgaufwendig, da meistens eine beträchtliche Polyesterschicht nachträglich abgetragen werden muß.

Es ist ebenfalls bekannt, Blechfolien mit Haftklebstoffen zu beschichten und diese selbsthaftend ausgerüstete Folie zum Reparieren beschädigter oder korrodierter Bleche, insbesondere nichttragende Karosserieteile zu verwenden. Derartige Blechfolien sind jedoch, damit sie auch in Rundungen eingesetzt werden können, meist sehr dünn und unter geringem Druck leicht verformbar. Wählt man dickere und steifere Blechqualitäten, heben sich Ecken und Kanten unter der Einwirkung auch leichter Verformulgsspannungen wieder ab. Will man dickere Bleche verwenden, muß man diese durch Schweißpunkte fixieren.

Darüber hinaus hat man in der US—PS 34 70 048 bereits ein weiteres Verfahren zum Reparieren beschädigter Bleche an nichttragenden Karosserieteilen beschrieben, wobei ein doppelseitig mit dauerdruckempfindlichem Klebstoff beschichtetes Schaumstoffband als Verbindungselement für aufzubringendes Reperaturblech dient.

Aufgabe der vorliegenden Erfindung war es, solche klebfähigen Blechbeschichtungen zu finden, die es gestatten, auch steifere Bleche nach entsprechender Verformung fest mit der zu repairierenden Karosserie zu verbinden.

Es wurde nunmehr gefunden, daß man mit Schmelzklebstoffen beschichtete Bleche, die einerseits eine genügende Steifigkeit aufweisen aber auch noch in befriedigender Weise um Kanten gebogen werden könne, für Blechraparaturen verwenden kann, ohne daß sich die Kanten nach dem Biegen auch über einge Radien wieder hochstellen, wenn man Schmelzklebstoffe auf der Basis thermokplastischer Block-Copolymerer einsetzt, die bei Temperaturen oberhalb 100°C bereits eine starke Haftklebrigkeit aufweisen, bei Raumtemperatur jedoch gegen Verformungsspannungen beständig sind.

Es finden daher vorzugsweise Verwendung Klebstoffbeschichtungen, basierend auf einem Blockmischpolymerisat aus Butadien, Isopren, Isobutylen, Ethylen/Isobutylen und Styrol als Außensegment, wobei das Blockmischpolymerisat auch hydriert sein kann, und die Zusammensetzung besteht aus

a) 100 Gewichtsteilen Blockmischpolymerisat aus Butadien, Isopren oder Ethylen/Isobutylen und Styrol,

b) 30 bis 80 Gewichtsteilen eines Kolophoniumesters eines höherwertigen Alkohols,

c) 130 bis 80 Gewichtsteilen polymerisiertem Cyclopentadienharz und/oder noch schmelzbarem Terpenphenolharz,

d) 0,5 bis 3 Gewichtsteilen bekannter Antioxidantien.

Vorzugsweise wird der Klebstoff in Folienform konfektioniert und dann aus die zu verbindenden Bleche aufgetragen. Natürlich kann man auch in anderer Weise applizieren, beispielsweise aus einem Schmelzkleber-Auftragsgerät mit entsprechend gestalteten Düsen. Wird der Klebstoff als folie eingesetzt, lagert man ihn zweckmäßig auf einer anderen Klebstoff abweisenden Trägerfolie wie silikonisiertes Papier. Die Klebstoffolie soll etwa 30 bis 350 μm, insbesondere 50 bis 250 μm dick sein. Die Reparaturbleche selbst haben die übliche Dicke zwischen etwa 0,3 und 0,07 mm.

Bei den Blockmischpolymerisaten auf Basis von Dienen mit Styrol handelt es sich um bekannte Produkte, die hier im einzelnen nicht beschrieben werden müssen. Sie sind seit längerem unter verschiedenen Namen im Handel.

Auch die Derivate des Kolophoniums, die erfindungsgemäß verwendet werden sollen, sind bekannt. Vorwiegend werden Glycerin oder Pentaerythritester des Kolophoniums eingesetzt oder auch sogenannte hydrierte oder disproportionierte Derivate.

Ferner können bekannte Terpen-, Terpenphenolharze und Kohlenwasserstoff-Harze, basierend auf polymerisiertem Cyclopentadien, Methylstyrol sowie Cumaron und Inden eingesetzt werden.

Als Antioxidantien kommen sowohl alkylsubstituierte Phenole als auch Zink-di-n-butyl-dithiocarbamat sowie Triphenylphosphin in Betracht.

Die zu Anwendung des Klebstoff notwendige Temperatur kann man mit hilfe eines Heißluftgebläses oder eines kräftigen Haarföns erzeugen. Die repairerten Stellen werden in üblicher Weise an den Kanten beigeschliffen und mit Spachtel und Lack überarbeitet.

Beispiel 1

In einem mit einem Wendelrührere ausgestatteten beheizbaren Behälter aus nichtorostendem Stahl wurden 39,0 Gewichtsprozent eines bei etwa 125°C schmelzenden Harzes auf der Basis Polycyclopentadien und 19,5 Gewichtsprozent eines bei etwa 150°C schmelzenden Kolophonium-Pentaerythritharzes bei 160°C aufgeschmolzen. Sodann wurden, 2,0 Gewichtsprozent Zink-di-n-Butyldithiocarbamat und 0,5 Gewichtsprozent Triphenylphosphin unter Rühren zugefügt. Danach wurden 39,0 Gewichtsprozent eines Styrolbutadien-Blockcopolymeren, wibei die Gewichtsanteile der Styrolblöcke 43% und die der Butandienblöcke 57% ausmachten, und die Viskosität einer 25 %igen Lösung in Toluol, gemessen nach Brockfield, etwa 1000 mPas betrug, unter Rühren hinzugefügt. Die Mischung wurde bei 160°C homogenisiert. Schließlich wurde die Homogene Schmelze in Behälter aus silikonisiertem Papier portioniert abgefüllt.

Der wie beschrieben hergestellte Schmelzklebstoff wurde im heizbaren Behälter eines Breitschlitzdüsenauftragsgerätes auf 180 bis 190°C erhitzt (die Viskosität der Schmelze betrug bei 180°C ca. 60 Pas, gemessen mit dem Gerät Rheomat 30) und mit Hilfe einer Pumpe der Breitschlitzdüse zugeführt und in eine Schichtstärke von etwa 0,2 mm und einer Breite von 150 mm auf nicht rostendes Stahlblech der Dicke 0,1 mm bei einer Geschwindigkeit von etwa 10 m/Min. aufgetragen. Nach dem Erkalten wurde der Klebstofffilm mit silikonisiertem Papier, das der Blechbahn von einer Rolle zugeführt wurde, abgedeckt und gemeinsam mit diesem auf eine Rolle aufgewickelt.

Auf die entfettete und angerauhte Oberfläche eines der Schenkel eines um 90°C abgewinkelten Prüfbleches aus Karosseriestahl der Dicke 0,8 mm, einer Breite von 30 mm und einer Schenkellänge von 150 mm, wurde ein entsprechend zugeschnittener Streifen des mit Klebstoff beschichteten Bleches aufgebracht und mit Holfe eines Heißluftföns kurzzeitig auf über 100°C erwärmt. Nach Anpressen mit einer Zwinge und Abkühlen betrug der Schälwiderstand der Klebung 3 N/mm.

### Beispiel 2

29,2 Gewichtsteile eines Tempenphenolharzes mit einem Schmelzpunkt von etwa 70°C und 29,2 Gewichtsteile eines Kolophonium-Pentaerythritharzes mit einem Schmelzpunkt von 105°C wurden mit 2,0 Gewichtsteilen Zink-di-n-butyldithiocarbamat und 0,5 Gewichtsteilen Triphenylphosphin sowie mit 39,1 Gewichtsteilen eines Styrol-Ethylen-Butylen-Blockcopolymeren, dessen Styrolblöcke 29 Gewichtsprozent und dessen Ethylen-Butylen-Blöcke 71 Gewichtsprozent ausmachten, wobei die Viskosität einer 20 %igen Lösung in Toluol, gemessen nach Brookfield, bei 25°C, 550 mPas betrug, analog zu Beispiel 1) bei etwa 160°C vermischt. Die homogene Schmelze wurde in Behälter aus silikonisierten Papier portioniert abgefüllt.

Der wie beschrieben, hergestellte Schmelzklebstoff wurde im heizbaren Behälter eines Breitschlitzdüsenauftragsgerätes auf 180 bis 190°C erhitzt (die Viskosität der Schmelze betrug bei 180°C ca. 65 Pas, gemessen mit dem Gerät Rheomat 30), mit Hilfe einer Pumpe der Breitschlitzdüse zugeführt und in einer Schichtstärke. von etwa 0,2 mm und einer Breite von 150 mm auf nichtostendes Stahlblech der Dicke 0,1 mm bei einer Geschwindigkeit von etwa 10 m pro Minute aufgetragen. Nach dem Erkalten wurde der Klebstofffilm mit silikonisiertem Papier, das der Blechbahn von einer Rolle zugeführt wurde, abgedeckt und gemeinsam mit diesem auf eine Rolle aufgewickelt.

Auf die entfettete und angerauhte Oberfläche eines der Schenkel eines bei 90° abgewickelten Prüfbleches aus Karosseriestahl der Dicke 0,8 mm, einer Breite von 30 mm und einer Schenkellänge von 150 mm wurde ein entsprechend zugeschnittener Streifen des mit Klebstoff beschichteten Bleches aufgebracht und mit Hilfe eines Heißluftföns kurzfristig auf über 100°C erwärmt. Nach Anpressen mit einer Zwinge und Abkühlen betrug der Schälwiderstand der Klebung 2 N/mm.

### Beispiel 3

Blechzuschnitte, die, wie in den Beispielen 1 und 2 geschildert, eine Beschichtung der Dicke 0,1 bis 0,2 mm mit einem Schmmelzklebstoff auf der Grundlage thermoplastischer Blockcopolymerer erhalten hatten, wurden in folgender Weise zur Reparatur durchgerosteter Stahlblechkarosserieteile angewandt:

Die durchgerostete Stelle des Blechteiles wurde mechanisch von Rost und anschließend durch Abreiben mit Waschbenzin von anhaftendem Schleifstaub befreit. Danach wurden von der Klebstoffbeschichtung eines Reparaturblechabschnittes entsprechender Größe die Silikonpapierabdeckung entfernt. Die zu reparierende Blechstelle wurde mit einem Heißluftgebläse vorgewärmt und auf die vorgewärmte Stelle das Reparaturblech unter weiterem Erwärmen angedrückt. Dabei war es auch möglich, das Blech über Kanten abzubiegen, ohne daß es zum Aufstellen des abgebogenen Blechabschnittes kam. Nach dem Erkalten wurden die Blechkanten beigeschliffen und die reparierte Stelle mit einem handelsüblichen Reparaturspachtel auf der Basis ungesättigter Polyesterharze nach bearbeitet und anschließend in üblicher Weise grundiert und überlackiert.

### Patentansprüche

1. Mit Schmelzklebstoff beschichtete Bleche, die eine für Reparaturen notwendige Steifigkeit aufweisen, dadurch gekennzeichnet, daß solche Schmelzklebstoffe verwendet werden, die auf Basis thermoplastischer Blockcopolymerer aufgebaut sind und bei Temperaturen oberhalb 100°C bereits eine starke Haftklebrigkeit aufweisen sowie bei Raumtemperatur gegen Verformungsspannungen beständig sind.

2. Mit Schmelzklebstoff beschichtete Bleche nach Anspruch 1, dadurch gekennzeichnet, daß man als Schmelzklebstoffe Blockcopolymere aus Butadien, Isopren, Isobutylen/Ethylen und Styrol als Außensegment einsetzt, wobei das Blockmischpolymerisat auch hydriert sein kann, und die Zusammensetzung besteht aus

a) 100 Gewichtsteilen Blockmischpolymerisat aus Butandien, Isopren oder Ethylen/Isobutylen und Styrol,

b) 30 bis 80 Gewichtsteilen eines Kolophoniumesters eines höherwertigen Alkohols,

c) 130 bis 80 Gewichtsteilen polymerisiertem Cyclopentadienharz und/oder noch schmelzbarem Terpenphenolharz,

d) 0,5 bis 3 Gewichtsteilen bekannter Antioxidantien.

3. Mit Schmelzklebstoff beschichtete Bleche nach Anspruch 1 und 2, dadurch gekennzeichnet, daß er in Form einer 30 bis 350 µm, insbesondere 50 bis 250 µm dicken Folie, die insbesondere auf einer temporären kelbstoffabweisenden Folie gelagert ist, eingesetzt wird.

4. Verwendung der mit Schmelzklebstoff nach Ansprüchen 1 und 2 beschichteten Bleche zur Reparatur nicht tragender Blechkonstruktionen.

**Revendications**

1. Tôle enduite d'adhésif à fusion, présentant la rigidité requise pour les réparations, caractérisée en ce que sont utilisés des adhésifs à fusion, préparés à partir de copolymères thermoplastiques à blocs et présentant déjà aux températures supérieures à 100°C une forte adhésivité, tout en résistant aux tensions de déformation à température ambiante.

2. Tôle enduite d'adhésif à fusion selon la revendication 1, caractérisée en ce que sont utilisés comme adhésifs à fusion des copolymères à blocs constitués de butadiène, isoprène, isobutylène/éthylène et styrène comme segment externe, où le copolymère à blocs peut aussi être hydrogéné, et la composition de l'adhésif est la suivante:

a) 100 parties en poids de copolymère à blocs du butadiène, isoprène ou éthylène/isobutylène et styrène,

b) 30 à 80 parties en poids d'un ester de colophane dérivé d'un polyalcool,

c) 130 à 80 parties en poids de résine de cyclopentadiène polymérisée et/ou de résine terpénique-phénolique encore fusible.

d) 0,5 à 3 parties en poids d'antioxydants connus.

3. Tôle enduite d'adhésif à fusion, selon les revendications 1 et 2, caractérisé en ce qu'elle se présente sous la forme d'une feuille d'une épaisseur de 30 à 350 µ, en particulier, de 50 à 250 µ, appliquée sur une feuille temporaire repoussant l'adhésif.

4. Mise en oeuvre des tôles enduites de colle selon les revendications 1 et 2 pour la réparation des structures en tôle non portantes.

**Claims**

1. Hotmelt-coated metal plates with the rigidity required for repairs, characterized in that the hotmelts used are based on thermoplastic block copolymers, show high contact tackiness at temperatures above 100°C and are stable to deformation stresses at room temperature.

2. Hotmelt-coated metal plates as claimed in claim 1, characterized in that the hotmelts used are block copolymers of butadiene, isoprene, isobutylene/ethylene and styrene as outer segment, which may even be hydrogenated, and have the following composition:

a) 100 parts by weight block copolymer of butadiene, isoprene or ethylene/isobutylene and styrene,

b) 30 to 80 parts by weight of a colophony ester of a higher alcohol,

c) 130 to 80 parts by weight polymerized cyclopentadiene resin and/or fusible terpene-phenol resin,

d) 0,5 to 3 parts by weight known antioxidants.

3. Hotmelt-coated metal plates as claimed in claims 1 and 2, characterized in that it is used in the form of a 30 to 350 µm thick and, more especially, 50 to 250 µm thick film stored in particular on a temporary adhesive-repellent film.

4. The use of the hotmelt-coated metal plates claimed in claims 1 and 2 for the repair of non-load-bearing metal plate constructions.